# EUROPÄISCHE PATENTSCHRIFT

(11) **EP 1 763 988 B1**
(45) Veröffentlichungstag und Bekanntmachung des Hinweises auf die Patenterteilung: **25.02.2009**
(21) Anmeldenummer: 06117881.0
(22) Anmeldetag: 26.07.2006
(51) Int. Cl.: A01D 41/127

(54) **Verfahren zur Einstellung eines Arbeitsaggregats einer Erntemaschine**
Method for regulation of a working unit of a harvesting machine
Procédé de régulation d'un organe de travail d'une récolteuse agricole

(30) Priorität: 14.09.2005 DE 102005043991
(43) Veröffentlichungstag der Anmeldung: 21.03.2007
(73) Patentinhaber: CLAAS Selbstfahrende Erntemaschinen GmbH, 33428 Harsewinkel (DE)
(72) Erfinder: Behnke, Willi, 33803 Steinhagen (DE)

(56) Entgegenhaltungen:
- EP-A- 1 360 891
- EP-A- 1 529 428
- US-A- 5 309 374
- US-A- 6 119 442
- US-A1- 2005 279 070

## Beschreibung

Die Erfindung betrifft ein Verfahren zur Einstellung eines Arbeitsaggregats einer Erntemaschine, insbesondere einer selbstfahrenden Erntemaschine. Darüber hinaus betrifft die Erfindung eine Erntemaschine, bei der zumindest eines der Arbeitsaggregate gemäß einem solchen Verfahren einstellbar ist.

Landwirtschaftliche Erntemaschinen, insbesondere selbstfahrende Erntemaschinen wie Mähdrescher, Feldhäcksler etc., verfügen zur Bearbeitung verschiedener Erntegüter über mehrere einstellbare Arbeitsaggregate. Dabei sind die einzelnen Aggregate bei modernen Erntemaschinen üblicherweise mit aus der Fahrerkabine fernbedienbaren Stelleinrichtungen ausgestattet, mit denen die Arbeitsaggregate bzw. verschiedene Steuerparameter der Arbeitsaggregate eingestellt werden können. Zu den typischen Arbeitsaggregaten eines Mähdreschers gehören beispielsweise das Dreschwerk, welches üblicherweise einen Dreschkorb und eine oder mehrere Dreschtrommeln aufweist, sowie eine dem Dreschwerk nachgeschaltete Reinigungseinrichtung, welche in der Regel ein Gebläse und mehrere Siebe umfasst. Unterschiedliche Erntegüter und Erntebedingungen wie Feuchtigkeit, Bestandshöhe, Bodenbeschaffenheit etc. erfordern, dass die einzelnen Aggregate bzw. deren einstellbare Steuerparameter möglichst genau an den individuellen laufenden Ernteprozess angepasst werden, um insgesamt ein optimales Arbeitsergebnis zu erzielen.

Trotz vieler Einstellhilfen, welche die Hersteller der Erntemaschinen den Bedienern anbieten - wie z. B. ausführliche Bedienerschulungen, Handlisten, aus denen der Bediener für verschiedene Erntesituationen vorgegebene Einstellwerte entnehmen kann, oder elektronische Hilfsmittel wie elektronische Bordinformationssysteme, von denen optimierte Einstellwertkombinationen für verschiedenste Erntesituationen zur Auswahl vorgegeben werden - ist es für die Bediener nach wie vor relativ schwierig, die Maschine so einzustellen, dass sie gemäß den gewünschten Vorgaben optimal arbeitet. Dies gilt vor allem für unerfahrene und/oder ungeübte Bediener, insbesondere zu Beginn einer Erntesaison. Daher kommt es in vielen Fällen vor, dass die Erntemaschine bzw. deren Arbeitsaggregate nicht optimal an den aktuellen Ernteprozess angepasst sind und vorhandene Ernteleistungskapazitäten der Maschine ungenutzt bleiben, schlechte Arbeitsergebnisse erzielt werden oder sogar unnötige Ernteverluste erzeugt werden.

In der US 6,119,442 wird daher ein Verfahren zur automatischen Einstellung der Arbeitsaggregate einer Erntemaschine beschrieben. Dabei wird u. a. eine Maschinenbeobachtungseinrichtung mit einem Bildsensor verwendet, welcher Bilder des Ernteguts macht. Diese Bilder werden dann ausgewertet, um beispielsweise in dem ausgedroschenen und gereinigten Erntegutstrom Kornbruch-Anteile, Verunreinigungen etc. zu erkennen und entsprechende Steuersignale zur geeigneten Einstellung der Arbeitsaggregate zu generieren. Das gesamte Bildauswerte- und Steuerungsverfahren ist jedoch relativ aufwendig.

Es ist daher eine Aufgabe der vorliegenden Erfindung, ein alternatives Steuerungsverfahren zur Einstellung eines Arbeitsaggregats einer Erntemaschine sowie eine entsprechende Erntemaschine zu schaffen, welche auf einfache Weise selbst bei sehr komplexen Einstellabhängigkeiten auch weniger geübten Bedienern eine sichere, optimal an den jeweiligen Ernteprozess angepasste Einstellung der Arbeitsaggregate der Erntemaschine erlauben.

Diese Aufgabe wird zum einen durch ein Verfahren gemäß Patentanspruch 1 und zum anderen durch eine Erntemaschine gemäß Patentanspruch 13 gelöst.

Bei dem erfindungsgemäßen Verfahren zur Einstellung eines Arbeitsaggregats einer Erntemaschine werden an einer dem betreffenden Arbeitsaggregat nachgeordneten Position im Ernteguttransportweg bei verschiedenen Einstellzuständen mit bestimmten Steuerparameter-Einstellwerten des Arbeitsaggregats zunächst Bilder oder Bildserien des Ernteguts erzeugt. Diese Bilder oder Bildserien werden unter Zuordnung von zu dem jeweiligen Einstellzustand des betreffenden Arbeitsaggregats zugehörigen Steuerparameter-Einstellwerten gespeichert. Es wird dann aufgrund einer, vorzugsweise qualitativen, Analyse des auf den Bildern oder Bildserien dargestellten Erntegutstroms ein Bild oder eine Bildserie ausgewählt und das betreffende Arbeitsaggregat schließlich unter Verwendung der dem ausgewählten Bild oder der ausgewählten Bildserie zugeordneten Steuerparameter-Einstellwerte eingestellt, d. h. mit einem passenden Soll-Einstellwert angesteuert.

Bei diesem Verfahren muss folglich nicht aufgrund einer komplizierten Auswertung der aktuellen Bilder entschieden werden, welche Steuerparameter in welcher Richtung zu verstellen sind, beispielsweise ob eine höhere oder eine niedrigere Dreschtrommeldrehzahl zu wählen ist oder ob die Maschenweite eines Unter- oder Obersiebs der Reinigungseinrichtung vergrößert oder verkleinert werden muss, sondern es muss nur entschieden werden, in welchem der aufgenommenen Bilder der Erntegutstrom die beste Qualität aufweist. Dementsprechend werden die bereits bekannten, gemeinsam mit dem Bild bzw. der Bildserie gespeicherten Steuerparameter-Einstellwerte angefahren. Das gesamte Verfahren ist folglich ausgesprochen einfach und unkompliziert.

Eine geeignete Erntemaschine muss hierzu nur mit einem Bilddetektor, beispielsweise einer CCD-Kamera oder dergleichen, ausgestattet sein, der an einer dem betreffenden Arbeitsaggregat nachgeordneten Position im Ernteguttransportweg angeordnet ist, um Bilder oder Bildserien des Erntegutstroms an dieser Position zu erzeugen. Der Bilddetektor kann dabei dem Arbeitsaggregat unmittelbar im Ernteguttransportweg nachgeschaltet sein oder kann sich auch an einer Position im Erntegutstrom hinter weiteren Aggregaten befinden. Beispielsweise kann zur Einstellung der Drescheinrichtung in einem Mähdrescher ein Bild des Erntegutstroms vor der Reinigungseinrichtung, unmittelbar nach der Dreschvorrichtung, aufgenommen werden. Es ist aber auch möglich, die Dreschvorrichtung auf Basis von Bildern bzw. Bildserien des Erntegutstroms durchzuführen, die vom ausgedroschenen und gereinigten Erntegutstrom hinter der Reinigungseinrichtung erzeugt werden. Vorzugsweise werden die Bilder oder Bildserien im Ernteguttransportweg zwischen einem Ausgang einer Reinigungseinrichtung und einem Erntegutspeicher, d.h. beispielsweise einem Korntank, oder einem Erntegutausgang, z. B. einem Tankentleerförderer, der Erntemaschine erzeugt. Weiterhin wird eine entsprechende Steuereinheit benötigt, welche auf das Arbeitsaggregat und den Bilddetektor einwirkt und derart ausgebildet ist, dass das Arbeitsaggregat durch eine Ansteuerung mit bestimmten Steuerparameter-Einstellwerten in verschiedene Einstellzustände gebracht wird und dass bei verschiedenen Einstellzuständen des Arbeitsaggregats Bilder oder Bildserien des Erntegutstroms erzeugt werden. Des Weiteren werden eine Speichereinrichtung zum Speichern der Bilder oder Bildserien unter Zuordnung von zu dem jeweiligen Einstellzustand zugehörigen Steuerparameter-Einstellwerten und eine Auswahleinheit benötigt, um aufgrund einer Analyse des auf den Bildern oder Bildserien dargestellten Erntegutstroms ein Bild oder eine Bildserie auszuwählen. Schließlich muss die Erntemaschine mit einer geeigneten Steuereinheit ausgestattet sein, welche so ausgebildet ist, dass das betreffende Arbeitsaggregat unter Verwendung der dem ausgewählten Bild oder der ausgewählten Bildserie zugeordneten Steuerparameter-Einstellwerte eingestellt wird. Bei dieser Steuereinheit kann es sich um die gleiche Steuereinheit handeln, die auch dazu verwendet wird, um das Arbeitsaggregat in die verschiedenen Einstellzustände zur Anfertigung der Bilder oder Bildserien zu verbringen. Die Steuereinheiten können auch aus mehreren Untermodulen bestehen, wobei die beiden Steuereinheiten jeweils auf gleiche Module zur Ansteuerung der Arbeitsaggregate zugreifen. Die beiden Steuereinheiten bzw. die kombinierte Steuereinheit können beispielsweise in Form von Softwaremodulen in einer programmierbaren Steuereinrichtung der Erntemaschine realisiert sein.

Die abhängigen Ansprüche enthalten jeweils besonders vorteilhafte Ausgestaltungen und Weiterbildungen der Erfindung. Dabei kann eine erfindungsgemäße Erntemaschine auch entsprechend den Merkmalen der Verfahrensansprüche weitergebildet sein und umgekehrt.

Die Analyse des auf den Bildern oder Bildserien dargestellten Erntegutstroms, bei der es sich um eine vorzugsweise qualitative, aber auch quantitative Beurteilung des Erntegutstroms handeln kann, sowie die Auswahl des Bilds oder der Bildserie kann entweder visuell durch einen Bediener, halbautomatisch oder vollautomatisch durchgeführt werden.

Beispielsweise ist es in einem technisch sehr einfachen Verfahren möglich, dass die Bilder bzw. Bildserien einem Bediener der Erntemaschine zur Auswahl angezeigt werden. In diesem Fall muss die Auswahleinheit eine geeignete Anzeigeeinrichtung zur Anzeige der bei verschiedenen Einstellzuständen erzeugten Bilder oder Bildserien sowie eine Erfassungseinrichtung zur Erfassung eines Auswahlbefehls des Bedieners aufweisen. Üblicherweise besitzen moderne Erntemaschinen ohnehin entsprechende Benutzerschnittstellen mit einem geeigneten Display und Bedienelementen, welche im Rahmen der Erfindung (mit-) genutzt werden können. Vorzugsweise werden die Bilder oder Bildserien dabei dem Bediener - zumindest teilweise -parallel angezeigt, so dass er durch einen unmittelbaren Vergleich der Bilder bzw. Bildserien den besseren Einstellzustand erkennen und das entsprechende Bild bzw. die Bildserie auswählen kann. In diesem Fall erfolgt die Analyse also durch den Bediener der Erntemaschine durch einfachen Bildvergleich.

Weiterhin ist es auch möglich, die bei verschiedenen Einstellzuständen erzeugten Bilder oder Bildserien automatisch zu analysieren und auf Basis des Analyseergebnisses dann das Bild oder die Bildserie auszuwählen. Hierzu muss die Erntemaschine eine entsprechende Analyseeinheit aufweisen, welche z. B. in Form von Software auf einer geeigneten programmierbaren Steuereinrichtung realisiert sein kann. Eine solche automatische Analyse kann mit Hilfe üblicher Bildauswerteverfahren, beispielsweise mit einem Objekterkennungsverfahren, durchgeführt werden. Hierzu können bestimmte Bildmerkmale in einem Speicher hinterlegt werden, die innerhalb einer Bildauswertung als charakteristische Merkmale zur Erkennung bestimmter Partikel, beispielsweise von Strohteilen oder Spelzen, im Bild des Erntegutstroms verwendbar sind. Es kann so z. B. die Anzahl der "Fremdkörper" innerhalb des im Bild sichtbaren Erntegutstroms einfach gezählt werden und anhand dieser ein Qualitätsmaß, beispielsweise ein Verschmutzungsgrad, der Kornbruch-Anteil oder eine gröbere Qualitätsbeurteilung wie "gut", "schlecht" oder "akzeptabel" etc. für den abgebildeten Erntegutstrom ermittelt werden.

Dieses Analyseergebnis kann dann vorzugsweise für eine visuelle/manuelle Auswahl eines Bilds bzw. einer Bildserie durch den Bediener mit dem Bild oder der Bildserie angezeigt werden, so dass dieser bei der Auswahl unterstützt wird.

Bei einer anderen bevorzugten Variante wird die Auswahl ebenfalls automatisch durchgeführt, indem beispielsweise einfach die Analyseergebnisse der verschiedenen Bilder maschinell verglichen werden. Hierzu weist die Erntemaschine vorzugsweise eine geeignete maschinelle Auswahleinheit auf, die z. B. in einen Steuerprozessor der Erntemaschine implementiert sein kann.

Besonders bevorzugt wird mit Hilfe der Auswahleinheit ein bestimmtes Bild oder eine Bildserie ausgewählt und es werden zusätzlich die Bilder oder Bildserien dem Benutzer angezeigt, wobei das von der Auswahleinheit ausgewählte Bild bzw. die Bildserie markiert wird und der Bediener dann die Auswahl bestätigen oder ggf. auch ein anderes Bild oder eine andere Bildserie bzw. den zugehörigen Einstellzustand auswählen kann.

Zur Unterstützung der Analyse bzw. der Auswahl eines Bilds oder einer Bildserie können vorzugsweise auch bereits hinterlegte Referenzbilder herangezogen werden, welche jeweils Erntegutströme mit unterschiedlichem Verschmutzungsgrad zeigen. Mit Hilfe dieser Referenzbilder kann insbesondere der Bediener bei einer visuellen Auswahl leichter entscheiden, ob die Qualität des Erntegutstroms gut oder schlecht ist. Vorzugsweise werden den Referenzbildern jeweils Qualitätsinformationen betreffend den auf dem jeweiligen Referenzbild abgebildeten Erntegutstrom zugeordnet, welche beispielsweise bei einer Wiedergabe der Referenzbilder zusätzlich angezeigt werden können. Bei solchen Qualitätsinformationen kann es sich um ein exaktes Qualitätsmaß, z. B. einen Verschmutzungsgrad, aber auch um eine grobe Qualitätsbeurteilung wie "gut", "schlecht" oder "akzeptabel" handeln.

Zur Einstellung eines bestimmten Arbeitsaggregats, beispielsweise der Dreschvorrichtung oder der Reinigungsvorrichtung eines Mähdreschers, wird vorzugsweise innerhalb eines Optimierungsvorgangs zumindest ein Steuerparameter oder eine Gruppe von Steuerparametern des betreffenden Arbeitsaggregats unter Konstanthaltung der übrigen Steuerparameter gezielt variiert und dann bei bestimmten Einstellungen dieses Steuerparameters bzw. der Gruppe der Steuerparameter jeweils ein Bild oder eine Bildserie erzeugt. Anschließend wird dann erfindungsgemäß ein Bild oder eine Bildserie der verschiedenen Einstellzustände ausgewählt und entsprechend mit diesem Steuerparameter-Einstellwert bzw. dieser Gruppe von Steuerparameter-Einstellwerten das betreffende Arbeitsaggregat angesteuert. In einem nachfolgenden Zyklus kann dann ein anderer Steuerparameter bzw. eine andere Gruppe von Steuerparametern in gleicher Weise eingestellt werden.

Mit diesem Verfahren ist es auch möglich, mehrere verschiedene Arbeitsaggregate der Erntemaschine erfindungsgemäß zu optimieren. Dabei werden vorzugsweise die im Ernteguttransportweg innerhalb der Erntemaschine weiter vorne liegenden Arbeitsaggregate vor den nachgeschalteten Arbeitsaggregaten eingestellt. Das heißt, es wird beispielsweise zuerst die Drescheinrichtung und dann die Reinigungseinrichtung optimiert, da die optimalen Parameter der Reinigungseinrichtung auch von dem von der Drescheinrichtung kommenden Erntegutstrom abhängen. Grundsätzlich ist aber auch ein iteratives Verfahren möglich, d. h. dass mehrere Optimierungszyklen gefahren werden, um so letztendlich zu einer idealen Einstellung zu gelangen. Es ist klar, dass bei der Optimierung der Einstellungen der Arbeitsaggregate auch noch weitere für den Ernteprozess wichtige Parameter, wie die Durchflussmenge oder eine einzuhaltende minimale oder maximale Fahrgeschwindigkeit, berücksichtigt werden können.

Als Startwert für das vorbeschriebene Optimierungsverfahren kann beispielsweise eine erntegutabhängige Grundeinstellung gewählt werden, welche in den meisten Erntemaschinen als Standard vorgegeben ist. Vorzugsweise wird ein Bild des Erntegutstroms bei einem bestimmten Einstellzustand erst nach Ablauf einer bestimmten Zeitspanne erzeugt, nachdem der betreffende Einstellzustand des Arbeitsaggregats angefahren wurde. D. h. es wird ein "Einschwingvorgang" abgewartet, bis die Qualität des Erntegutstroms am Ort der Bilderstellung auch tatsächlich durch den eingestellten Soll-Einstellzustand bedingt ist.

Bei einer besonders bevorzugten Variante sind mit den Bildern oder Bildserien nicht nur die Steuerparameter-Einstellwerte des einzustellenden Arbeitsaggregats, sondern auch die zum Zeitpunkt der Bilderzeugung gegebenen Steuerparameter-Einstellwerte anderer Arbeitsaggregate der Erntemaschine und/oder weitere Informationen über die zum Zeitpunkt der Bilderzeugung vorliegenden Erntebedingungen gespeichert. Dies hat den Vorteil, dass sich der Bediener beispielsweise zu einem späteren Zeitpunkt Bilder oder Bildserien früherer Optimierungsvorgänge gemeinsam mit den dort gespeicherten Steuerparameter-Einstellwerten und Informationen anzeigen lassen kann und - sofern die Einstellungen der anderen Arbeitsaggregate und der aktuellen Erntebedingungen bekannt sind - unter Verwendung dieser Informationen ein geeignetes früheres Bild bzw. eine Bildserie auswählen kann, um sofort mit einer relativ guten Einstellung zu starten. Basierend auf diesen Einstellwerten kann dann nachfolgend eine weitere Optimierung gemäß dem erfindungsgemäßen Verfahren erfolgen.

Die Erfindung wird im Folgenden unter Hinweis auf die beigefügten Figuren anhand eines Ausführungsbeispiels noch einmal näher erläutert. Es zeigen:
Figur 1 einen schematischen Querschnitt durch einen Mähdrescher,
Figuren 2a bis 2d Bilder von verschiedenen Erntegutströmen,
Figur 3 eine schematische Darstellung der zur erfindungsgemäßen Steuerung benötigten Komponenten in einem Mähdrescher sowie deren Wechselwirkung untereinander,
Figur 4 ein Flussdiagramm zur Darstellung eines möglichen Ablaufs zur Aufnahme von Bildserien eines Erntegutstroms.

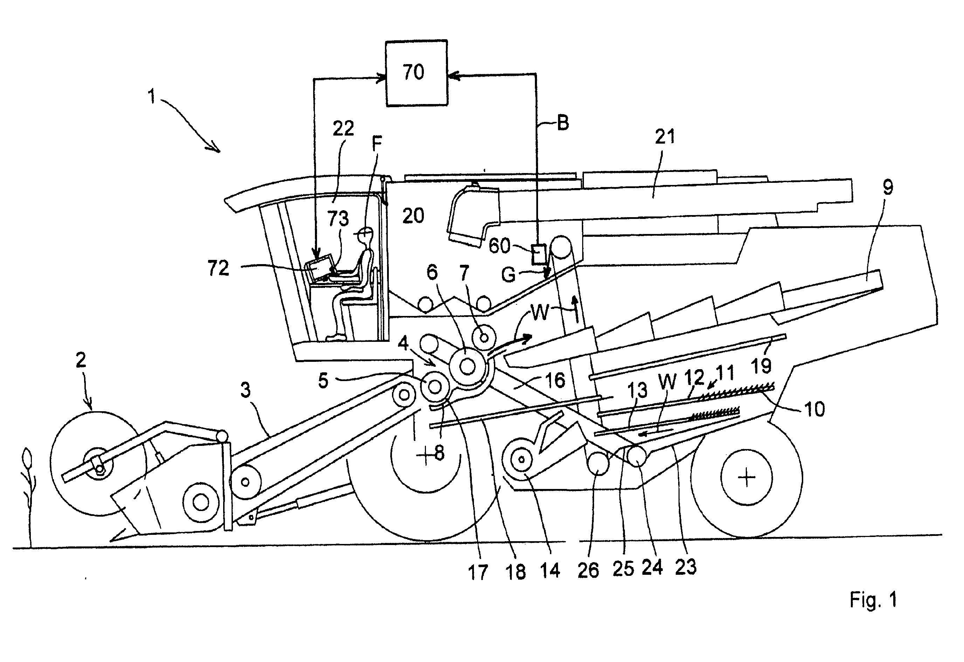

Bei dem in Figur 1 gezeigten Ausführungsbeispiel der Erfindung handelt es sich um einen selbstfahrenden Mähdrescher 1 mit einem sog. Tangential-oder auch Querflussdreschwerk 4 und einem dahinter angeordneten Schüttler 9 als Abscheideeinrichtung. Unterhalb des Schüttlers 9 befindet sich eine Reinigungseinrichtung 11, bestehend aus zwei übereinander angeordneten Sieben 12, 13 und einem Gebläse 14. Die Erfindung ist aber ausdrücklich nicht auf derartige Mähdreschertypen beschränkt.

Das Erntegut wird zunächst von einem Schneidwerk 2 aufgenommen, welches das Erntegut einem Schrägförderer 3 zuführt. Der Schrägförderer 3 übergibt das Erntegut an die entgegen dem Uhrzeigersinn rotierenden Dreschorgane 5, 6, 7 der Drescheinrichtung 4. Dabei wird das aus dem Schrägförderer 3 kommende Erntegut zunächst durch eine Vorbeschleunigertrommel 5 erfasst und weiter von einer Dreschtrommel 6 durch den Dreschspalt 17 gezogen, der durch den Abstand zwischen der Vorbeschleunigertrommel 9 bzw. der Dreschtrommel 6 zu dem darunter angeordneten Dreschkorb 8 gegeben ist. Dabei bearbeitet die Dreschtrommel 6 das Erntegut mechanisch, infolgedessen ein Korn-Spreu-Gemisch am Dreschkorb 8 abgeschieden wird, welches über einen Vorbereitungsboden 18 der Reinigungseinrichtung 11 zugeführt wird. In der Reinigungseinrichtung 11 werden die Körner von den Nicht-Kornbestandteilen, d. h. von Halm- und Spreuteilen, getrennt. Vom Dreschwerk 4 gelangt der im Wesentlichen aus gedroschenen Halmen bestehende Restgutstrom dann über die Wendetrommel 7 auf den Hordenschüttler 9, der den Restgutstrom in den rückwärtigen Bereich des Mähdreschers 1 fördert. Dabei werden die noch im Restgutstrom befindlichen Körner sowie evtl. Kurzstroh und Spreu abgetrennt, indem sie durch den mit Sieböffnung versehenen Hordenschüttler 9 hindurch auf einen Rücklaufboden 19 fallen. Der Rücklaufboden 19 transportiert die Körner, das Kurzstroh und die Spreu zum Vorbereitungsboden 18 zurück.

Die Körner, das Kurzstroh und die Spreu gelangen über den Vorbereitungsboden 18 ebenfalls zur Reinigungseinrichtung 11, in welcher die Körner vom Kurzstroh und Spreu getrennt werden. Die Reinigung erfolgt in der Weise, dass durch die Sieböffnungen im Obersieb 12 und im Untersieb 13 mittels des Gebläses 14 Wind hindurchgefördert wird, welcher das über die Siebe 12, 13 in den hinteren Bereich des Mähdreschers 1 geführte Erntegut auflockert und für das Heraustrennen der spezifisch leichteren Spreu- und Kurzstrohanteile sorgt, während die schwereren Erntegutkörner durch die Sieböffnungen fallen. Die Siebe 12, 13 sind teilweise übereinander angeordnet, so dass das Erntegut in zwei verschiedenen Stufen unterschiedlich fein gesiebt wird, wobei die Maschenweite der Siebe 12, 13 veränderbar ist. Durch die Veränderung der Maschenweite und/oder der Drehzahl des Gebläses 14 lassen sich der Anteil der Menge, der durch die Sieböffnungen hindurchfällt, der sog. "Siebdurchgang", und der Anteil, der über das Sieb 12, 13 transportiert wird, der sog. "Siebüberlauf", regeln. Ein Siebdurchgang, der im Überkehrbereich 10, d. h. im hinteren Bereich des Obersiebs 12, welcher nicht mehr über dem Untersieb 13 liegt, durch das Obersieb 12 fällt, sowie der Siebüberlauf am Ende des Untersiebs 13 enthalten in der Regel schwerere Teilchen, d. h. beispielsweise unausgedroschene Ähren. Dieser Erntegutanteil wird nachfolgend als sog. "Überkehr-Erntegutmenge" bezeichnet. Die Überkehr-Erntegutmenge fällt auf einen schräg verlaufenden Auffangboden 23 unterhalb der Reinigungseinrichtung 11 und gleitet in eine Ährenförderschnecke 24. Die Ährenförderschnecke 24 fördert die Überkehr-Erntegutmenge in einen Ährenelevator 16, der sie erneut dem Dreschwerk 4 zuführt. Der Siebüberlauf, der nicht durch das Obersieb 31 hindurchfällt, wird im oberen Bereich des Mähdreschers 1 als Reinigungsverlust ausgeworfen.

Das Stroh sowie ein bestimmter Prozentsatz an Verlustkörnern wandern über den Hordenschüttler 9 zum hinteren Ende des Mähdreschers 1 und werden dort als Abscheideverlust ausgeworfen.

Die Körner, welche durch beide Siebe 12, 13 der Reinigungsvorrichtung 11 gelangen, fallen auf einen weiteren schräg verlaufenden Auffang- und Führungsboden 25 und gleiten in eine Kornförderschnecke 26, die die Körner einem Kornelevator 15 zuführt. Sie werden dann von dem Kornelevator 15 in einen Korntank 20 des Mähdreschers 1 befördert und können dort bei Bedarf mit einem Tankentleerförderer 21 auf einen Transportwagen umgeladen werden. Erfindungsgemäß weist der Mähdrescher an einer Position entlang des Ernteguttransportweges W, hier am Ausgang des Kornelevators 15, einen Bilddetektor auf, mit dem Bilder B des aus dem Kornelevator 15 herausströmenden Erntegutstroms G aufgenommen werden. Im vorliegenden Fall dient als Bilddetektor eine einfache CCD-Kamera 60. Anhand dieser Bilder B wird die Qualität des Erntegutstroms G geprüft, insbesondere ob sich im Erntegutstrom noch Verunreinigungen, beispielsweise Reststrohbestandteile, Spelzen, unausgedroschene Ähren etc. befinden.

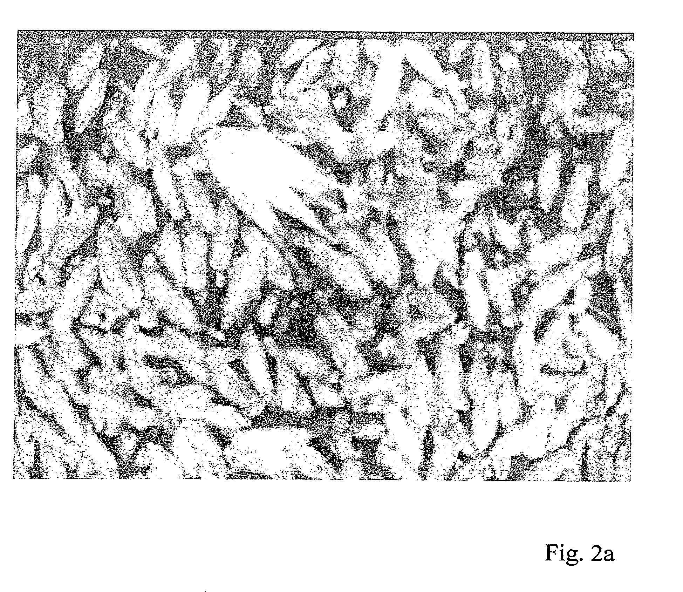

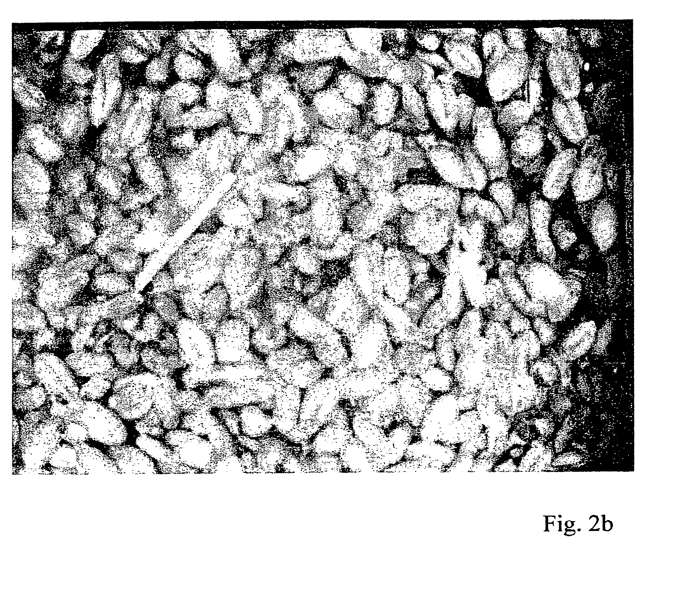

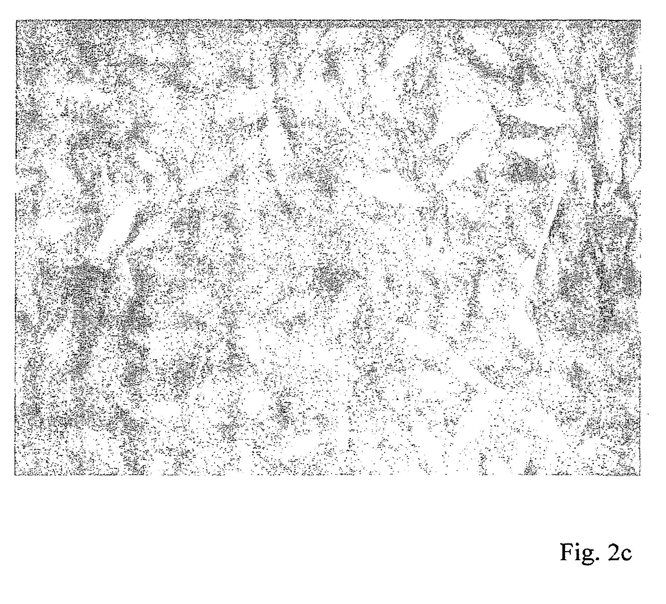

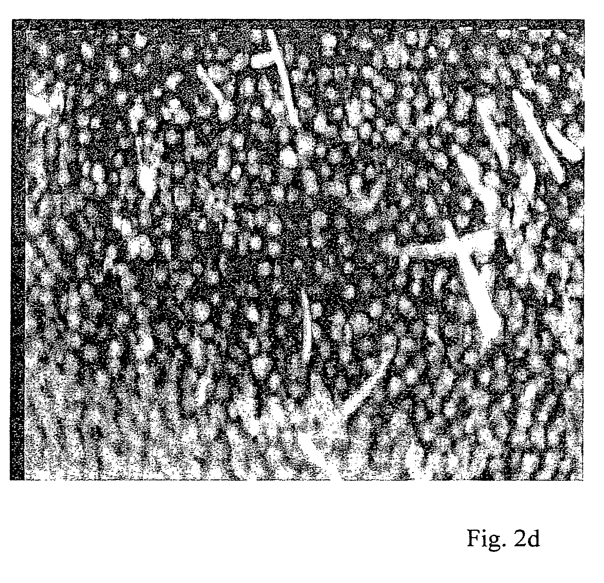

Die Figuren 2a bis 2d zeigen Bilder verschiedener Erntegutströme, wobei hier zur Verdeutlichung Bilder ausgewählt wurden, in denen sich jeweils noch bestimmte Nicht-Kornbestandteile befinden. So zeigt Figur 2a ein Bild von Tritikale-Körnern, wobei im Erntegutstrom innerhalb der Tritikale-Körner noch deutlich eine Ährenspitze zu erkennen ist. Figur 2b zeigt ebenfalls ein Bild eines Tritikale-Erntegutstroms, wobei innerhalb der Tritikale-Körner deutlich ein Kurzstrohteilchen erkennbar ist. Figur 2c zeigt ein Bild von einem Gerstegutstrom mit Grannen und Figur 2d zeigt einen Rapsgutstrom, in welchem sich noch Schotenteile befinden.

Die von der Kamera 60 aufgenommenen Bilder B des Erntegutstroms G werden einer Steuervorrichtung 70 zugeführt, welche wiederum mit einer Benutzerschnittstelle, bestehend aus einem Display 72 und einer Bedieneinrichtung 73, in der Fahrerkabine 22 des Mähdreschers 1 verbunden ist. Dort können die Bilder B beispielsweise einem Bediener bzw. Fahrer F der Erntemaschine 1 präsentiert werden.

Mit Hilfe der innerhalb der Fahrerkabine 22 angeordneten Benutzerschnittstelle 72, 73 kann der Fahrer F beispielsweise auch die aktuellen Erntebedingungen und das zu erntende Erntegut eingeben und den für diese Bedingung und das jeweilige Erntegut optimalen Erntegutdurchsatz und die zugehörigen optimalen Maschinenparameter einstellen bzw. maschinenseitig vorgeschlagene optimale Parameter setzen.

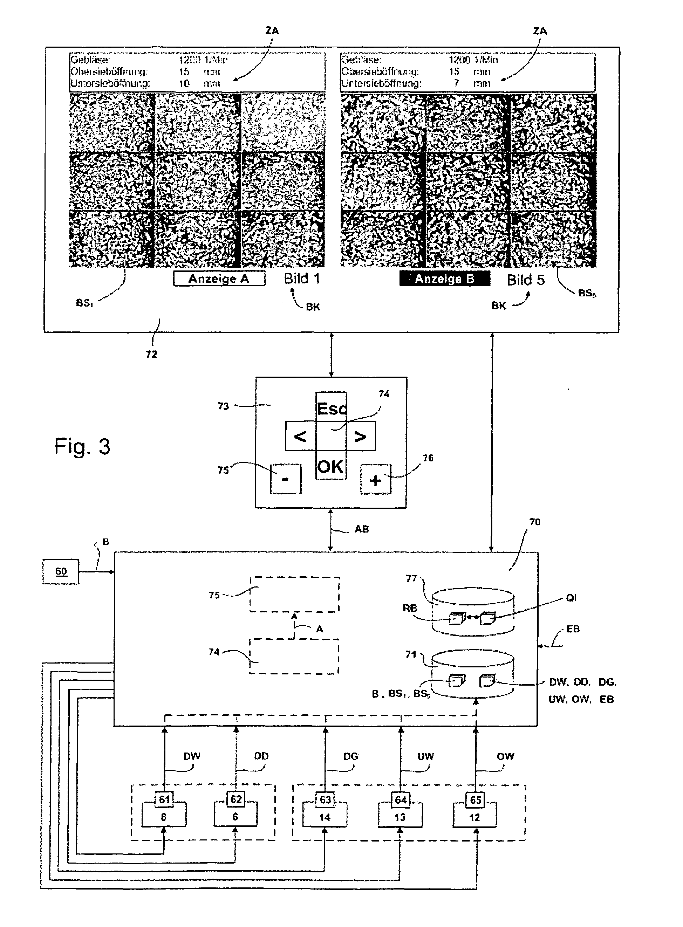

Die in der Regel ebenfalls in der Fahrerkabine 22 angeordnete Steuervorrichtung 70 ist in Figur 1 nur schematisch (als Block außerhalb der Erntemaschine 1) dargestellt. Eine etwas detailliertere Darstellung findet sich in Figur 3, auf die für die weiteren Erläuterungen der Erfindung verwiesen wird.

Wie in Figur 3 dargestellt, befinden sich an den verschiedensten Arbeitsorganen des Mähdreschers 1 mehrere Sensoren, welche die Einstellung der einzelnen Parameter der jeweiligen Arbeitsorgane 4, 11 messen. In dem Beispiel in Figur 3 sind nur die Sensoren für die Drescheinrichtung 4 und die Reinigungsvorrichtung 11 dargestellt. So ist am Dreschkorb 8 eine Dreschkorbweiten-Messeinrichtung 61 angeordnet, welche den Dreschspalt 17 zwischen dem Dreschkorb 8 und der Vorbeschleunigertrommel 5 und/oder den Dreschspalt 17 zwischen dem Dreschkorb 8 und der Dreschtrommel 6 detektiert und ein entsprechendes Dreschkorbweiten-Signal DW als einen Steuerparameter-Einstellwert an die Steuervorrichtung 70 liefert. Der Dreschtrommel 6 ist eine Dreschtrommeldrehzahl-Messeinrichtung 62 zugeordnet, welche die Dreschtrommeldrehzahl DD an die Steuereinrichtung 70 liefert. Die Drehzahl DG des Gebläses 14 wird mit einer Gebläsedrehzahl-Messeinrichtung 63 erfasst und ebenfalls an die Steuervorrichtung 70 übergeben. Die Maschenweiten UW, OW des Untersiebs 13 und des Obersiebs 12 werden mit einer Untersiebweiten-Messeinrichtung 64 und einer Obersiebweiten-Messeinrichtung 65 ermittelt und an die Steuereinrichtung 70 geliefert. Die Steuereinrichtung 70 kann in geeigneten - hier nur schematisch dargestellten - Regelschleifen den Dreschkorb 8 bzw. eine daran angeordnete Stelleinrichtung, den Dreschtrommelantrieb, den Gebläseantrieb und die Verstelleinrichtung für das Untersieb 13 und das Obersieb 12 zur Einstellung der gewünschten Steuerparameter-Einstellwerte DW, DD, DG, UW, OW ansteuern.

Von der Steuereinrichtung 70 aus werden auch die Bedieneinrichtung 73 und die Anzeigeeinrichtung 72 angesteuert. Grundsätzlich ist aber auch eine direkte Ansteuerung der Anzeigeeinrichtung 72 durch die Bedieneinrichtung 73 möglich.

Wie in Figur 3 noch einmal dargestellt wird, erhält die Steuereinrichtung 70 auch die Bilder B von der Kamera 60. Bestandteile der Steuereinrichtung 70 sind u. a. eine Bildanalyseeinheit 74 und eine Auswahleinheit 75 sowie zwei Speichereinheiten 71, 76 zur Speicherung von aktuellen Bildern B oder Bildserien BS₁, BS₅, von Referenzbildern RB, Qualitätsinformationen Q_{I} und/oder von gemessenen Steuerparameter-Einstellwerten DW, DD, DG, UW, OW. Zusätzlich können beispielsweise über die Benutzerschnittstelle 72, 73 oder auch durch weitere Messeinrichtungen Erntebedingungen EB eingegeben werden, welche ebenfalls in einer der Speichereinrichtungen 76 hinterlegt sein können.

Die Steuereinrichtung 70 ist in Figur 3 als ein Block schematisch dargestellt, in welchem die verschiedensten Komponenten integriert sind. Die Steuereinrichtung 70 kann in üblicher Weise aus Hardware- und/oder Software-Komponenten aufgebaut sein. In der Regel umfasst eine solche Steuereinrichtung 70 einen Prozessor oder mehrere untereinander vernetzte Prozessoren, auf denen entsprechende Software zur Steuerung der einzelnen Komponenten und zur Auswertung der Messsignale implementiert ist. Beispielsweise können die Auswahleinheit 75 und die Analyseeinheit 74 in Form von Software ausgebildet sein. Über geeignete weitere, nicht dargestellte Schnittstellen kann die Steuereinrichtung 70 auch noch beliebige andere Messsignale, beispielsweise von Sensoren zur Messung der Erntegutmenge, der Erntegutüberkehrmenge, der Verluste etc., empfangen und Steuerbefehle an beliebige weitere Arbeitsaggregate, beispielsweise an den Hordenschüttler 9, den Tankentleerförderer 21, das Schneidwerk 2 etc., ausgeben.

Die Speichereinrichtungen 71, 77 sind hier als Bestandteil der Steuervorrichtung 70 dargestellt. Grundsätzlich kann es sich aber auch um externe Speicher handeln, auf die Steuervorrichtung 70 Zugriff hat, um Daten darin abzulegen und wieder aufzurufen. Ebenso ist es möglich, sämtliche Daten in nur einer Speichervorrichtung abzulegen. Weiterhin können auch bereits für andere Komponenten der Erntemaschine 1 verwendete Speichervorrichtungen mitverwendet werden.

Das Gleiche trifft auch auf die Steuervorrichtung 70 selbst zu. Auch für das erfindungsgemäße Verfahren können bereits in der Maschine vorhandene Steuervorrichtungen mitverwendet werden, d. h. die vorhandenen Steuervorrichtungen können durch Implementation der entsprechend der Erfindung notwendigen Module aufgerüstet bzw. nachgerüstet werden. Insbesondere können die für die Erfindung benötigten Komponenten auch auf einer bereits in der Erntemaschine vorhandenen elektronischen Hardware- und Softwareplattform (z. B. die elektronische Bordinformation CEBIS der Firma Claas) aufsetzen. Erforderlich ist dann lediglich noch die Installation eines geeigneten Bilddetektors am Erntegutstrom.

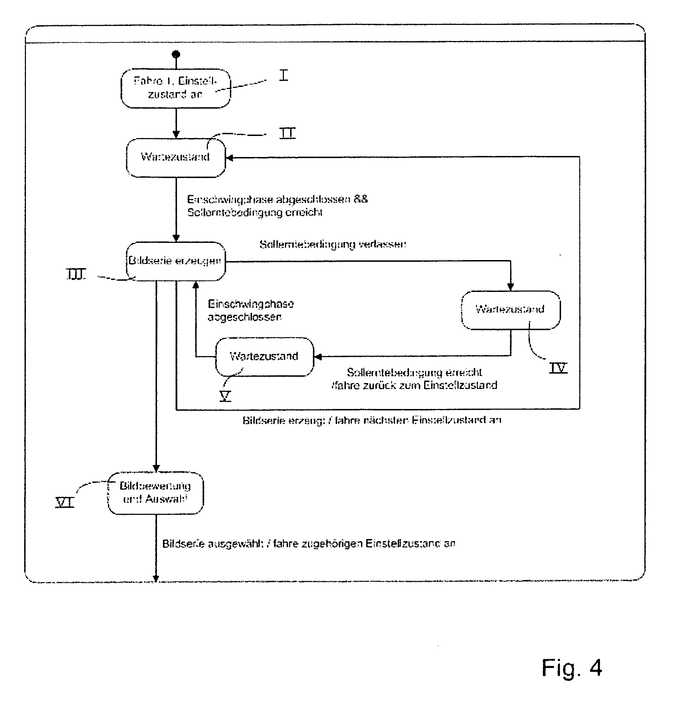

Im Folgenden wird weiter anhand der Figuren 3 und 4 erläutert, wie mit dem erfindungsgemäßen Verfahren die Reinigungseinrichtung 11 eines Mähdreschers gemäß Figur 1 eingestellt werden kann. Das gleiche Verfahren kann selbstverständlich auch eingesetzt werden, um die Dreschvorrichtung 4 oder andere Arbeitsorgane wie den Hordenschüttler oder Förderorgane einzustellen. Ebenso ist dieses Verfahren auch verwendbar, um beispielsweise in einem Feldhäcksler die Häckseltrommel oder andere Arbeitsorgane anzusteuern.

Das Verfahren beginnt zunächst damit, dass in einem ersten Schritt 1 (siehe Figur 4) ein bestimmter Einstellzustand angefahren wird, beispielsweise ein Einstellzustand, welcher innerhalb eines elektronischen Bordinformationsystems für die jeweilige Erntefrucht vorgegeben ist. Dann wird zunächst im Schritt 11 eine Einschwingphase abgewartet. Dies ist notwendig, da bei Einstellung eines Steuerparameter-Einstellwerts erst nach einem bestimmten zeitlichen Versatz diese Veränderung der Einstellung eine Wirkung im Erntegutstrom zeigt. Ist die Einschwingphase abgeschlossen und sind die aktuellen Sollerntebedingungen erreicht, so werden im Schritt III Bilder vom Erntegutstrom erzeugt.

Bei dem dargestellten Ausführungsbeispiel wird nicht nur ein einzelnes Bild, sondern eine ganze Bildserie von neun Bildern erzeugt. Diese Bildserien BS₁, BS₅ werden (wie in Figur 3 dargestellt) dem Fahrer auf der Anzeigeeinrichtung 72 jeweils vollständig mit matrixförmig nebeneinander und übereinander angeordneten Einzelbildern angezeigt. Die Anzeige von ganzen Bildserien BS₁, BS₅ hat den Vorteil, dass die Bilder eine bessere Aussagekraft über den tatsächlichen Zustand des Ernteguts haben, da es sich nicht nur um eine einzelne Momentaufnahme handelt.

Die erzeugte Bildserie BS₁, BS₅ wird dann gemeinsam mit den aktuellen Steuerparameter-Einstellwerten gespeichert. Wenn eine Bildserie erzeugt ist, wird der nächste Einstellzustand angefahren und dann wieder im Schritt II abgewartet, bis die Einschwingphase in den neuen Einstellzustand erreicht wird. Dann wird in Schritt III eine neue Bildserie erzeugt und gemeinsam mit den Einstellwerten abgespeichert. Die Speicherung erfolgt in dem Speicher 71. Dort werden die Bilder B bzw. Bildserien BS₁, BS₅ jeweils gemeinsam mit den aktuellen Steuerparameter-Einstellwerten DW, DD, DG, UW, OW und gemeinsam mit den aktuellen Erntebedingungen EB gespeichert. Vorzugsweise wird jeweils das aktuelle Bild bzw. die aktuelle Bildserie BS₁, BS₅ auf der Anzeigeeinrichtung 72 dargestellt.

Um die optimale Einstellung der Arbeitsorgane zu finden, wird wenigstens ein Steuerparameter-Einstellwert eines Arbeitsorgans geändert. Ggf. kann aber auch eine Gruppe von Steuerparameter-Einstellwerten gleichzeitig geändert werden. Die Variation nur eines Steuerparameter-Einstellwerts hat aber den Vorteil, dass der Fahrer sofort erkennen kann, welche Auswirkung dieser spezifische Steuerparameter auf die Erntegutqualität hat. Das Anfahren der verschiedenen Einstellzustände zur Anfertigung der Bilder, d. h. die Festlegung der jeweiligen Steuerparameter-Einstellwerte für die verschiedenen Einstellzustände, bei denen Bildserien angefertigt werden, kann vollautomatisch erfolgen. Grundsätzlich kann aber auch der Fahrer über die Benutzerschnittstelle bestimmen, bei welchen Einstellzuständen bzw. Steuerparameter-Einstellwerten er Bildserien aufnehmen möchte.

Da die Qualität des Erntegutstroms nicht nur von dem aktuellen Einstellzustand des Arbeitsaggregats abhängt, sondern auch stark durch die Erntebedingung wie z. B. die Erntegut-Bestandshöhe und die Fahrgeschwindigkeit beeinflusst wird, ist es wichtig, dass während einer Aufnahme die Erntebedingungen möglichst konstant gehalten werden. Insbesondere muss die Fahrgeschwindigkeit konstant gehalten werden, um nicht den Erntegutdurchfluss zu stark zu verändern, von dem die Belastung des jeweiligen Arbeitsaggregats abhängt. Da es aber während der Aufnahme einer Bildserie - beispielsweise bei einem Wendemanöver, beim Herausfahren und Hereinfahren in das Feld - vorkommen kann, dass sich die Erntebedingungen signifikant ändern, sollte die Aufnahme von Bildserien während solcher Phasen unterbrochen werden. Daher geht die Steuerung, wenn beim Erzeugen einer Bildserie im Schritt III die Soll-Erntebedingungen nicht eingehalten werden können, zunächst wieder in einen Wartezustand (Schritt IV) über. In diesem Wartezustand wird abgewartet, bis die Sollerntebedingungen wieder erreicht sind, beispielsweise bis sich der Mähdrescher nach einem Wendemanöver wieder normal im Erntevorgang im Feld befindet. Anschließend wird der zuvor eingestellte Einstellzustand wieder angefahren, im Schritt V die Einschwingphase abgewartet und dann im Schritt III die Bildserie bzw. die restlichen Bilder der Bildserie erzeugt. Zur Feststellung der aktuellen Erntebedingungen weist der Mähdrescher geeignete Sensoren wie Fahrgeschwindigkeitsmesser, Schichtdickenmesser im Ernteguteinzug und/oder weitere Durchflussmessgeräte etc. auf bzw. es werden Signale von bereits für andere Zwecke vorhandenen Sensoren für das erfindungsgemäße Verfahren entsprechend ausgewertet.

Sobald die Bildserien in allen anzufahrenden Einstellzuständen erzeugt sind, erfolgt schließlich im Schritt VI die Bildbewertung und Auswahl. Diese wird nachfolgend noch anhand von Figur 3 näher erläutert. Ist eine Bildserie ausgewählt, so wird der zugehörige Einstellzustand angefahren. Anschließend kann das gleiche Verfahren für einen weiteren Steuerparameter-Einstellwert desselben oder eines anderen Arbeitsaggregats durchgeführt werden, wobei der zunächst optimierte Steuerparameter-Einstellwert dann konstant gehalten wird. Vorzugsweise wird dieses Verfahren so durchgeführt, dass zunächst die entlang des Ernteguttransportwegs vorderen Arbeitsorgane eingestellt werden, weil die Belastung der nachfolgenden Arbeitsorgane von der Einstellung der vorgeschalteten Arbeitsorgane abhängt. Ebenso sollten auch bei der Reihenfolgeeinstellung soweit wie möglich Abhängigkeiten der verschiedenen Steuerparameter eines einzustellenden Arbeitsaggregats berücksichtigt werden. Um wechselseitige Abhängigkeiten mit einzubeziehen, kann das Verfahren auch iterativ durchgeführt werden.

Zur Auswahl einer Bildserie BS₁, BS₅ werden diese, wie in Figur 3 gezeigt, auf einer Anzeigeeinrichtung 72 dargestellt. Diese Anzeigeeinrichtung 72 weist hier zwei Anzeigefelder "Anzeige A" und "Anzeige B" auf, auf denen parallel nebeneinander jeweils zwei verschiedene Bildserien BS₁, BS₅ dargestellt werden können. Jede Bildserie BS₁, BS₅ besteht aus neun matrixförmig angeordneten Einzelbildern, welche kurz nacheinander vom Erntegutstrom gemacht wurden. Oberhalb der jeweiligen Bildserie werden auf einem Zustandsanzeigefeld ZA die relevanten Steuerparameter-Einstellwerte angezeigt, bei denen die jeweilige Bildserie BS₁, BS₅ erzeugt wurde.

Wie bereits erwähnt, handelt es sich bei dem in Figur 3 gezeigten Ausführungsbeispiel um die Einstellung der Reinigungseinrichtung 11. Die Bildserien BS₁, BS₅ unterscheiden sich hier dadurch, dass, wie oben auf den Zustandsanzeigefeldern ZA dargestellt ist, die Untersieböffnung (Untersiebweite) bei der linken Bildserie BS₁ 10 mm beträgt, wogegen die Untersieböffnung bei der rechten Bildserie BS₅ nur noch 7 mm beträgt. Wie aus der linken Bildserie BS₁ zu ersehen ist, befinden sich bei einer Untersieböffnungseinstellung von 10 mm noch Kurzstrohteile im Erntegutstrom, wogegen bei der Untersieböffnung von 7 mm, wie die rechte Bildserie BS₅ zeigt, keine Kurzstrohteile mehr zu finden sind.

Der Fahrer F kann über die Bedieneinrichtung 73 mit Hilfe von Plus-/Minustasten 75, 76 jeweils auf dem aktuellen Anzeigefeld ("Anzeige A" oder "Anzeige B") in den gespeicherten Bildserien blättern, d. h. er kann eine bestimmte Bildserie BS₅ aus dem Speicher 71 aufrufen, welche dann auf dem jeweiligen aktuellen Anzeigefeld dargestellt wird. Das "aktuelle" Anzeigefeld ist dadurch gekennzeichnet, dass die Bezeichnung (hier "Anzeige B") schwarz hinterlegt ist. Dabei werden oben im Zustandsanzeigefeld z. B. jeweils die zugehörigen Steuerparameter-Einstellwerte angezeigt. Unterhalb der Bilder ist in einem Bildkennungsanzeigefeld BK eine Bildkennung, beispielsweise ein Name oder eine Nummer, wie hier "Bild 1" und "Bild 5", eingeblendet. Dies erleichtert es dem Fahrer F, die Bilder bzw. Bildserien BS₁, BS₅ aus dem Speicher herauszusuchen bzw. einmal gezeigte Bilder/Bildserien wiederzufinden. Mit Hilfe der Bewegung der Cursortaste 74 nach rechts oder links kann er zwischen den beiden Anzeigefeldern hin- und herspringen. Möchte er die zugehörigen Einstellungen einer bestimmten Bildserie anfahren, d. h. eine Bildserie auswählen, so kann er die "OK"-Taste des Cursors 74 drücken. Es wird dann ein entsprechender Auswahlbefehl AB an die Steuereinrichtung 70 übermittelt. Das erfindungsgemäße Steuerungsverfahren kann in einem übergeordneten Steuerungsmenü aufgerufen werden. Die ESC-Taste dient dazu, um im Menü wieder eine Ebene nach oben zu springen.

Der Fahrer hat außerdem die Möglichkeit, sich beispielsweise auf einer der beiden Anzeigefelder die aktuellen Bildserien und parallel auf der anderen Anzeige Referenzbilder RB anzeigen zu lassen, die in der zweiten Speichereinrichtung 76 gemeinsam mit Qualitätsinformationen QI des auf den Referenzbildern dargestellten Erntegutstroms gespeichert sind. Bei den Qualitätsinformationen QI kann es sich beispielsweise um den prozentualen Verschmutzungsgrad oder Ähnliches handeln. Die Qualitätsinformationen QI können z. B. im Zustandsanzeigefeld ZA mit angezeigt werden. Ebenso können hier auch die Erntebedingungen EB angezeigt werden, die bei diesen Referenzbildern RB gegeben waren. Dem Fahrer wird durch einen Vergleich der aktuellen Bilder mit den Referenzbildern RB die Bewertung der aktuellen Bilder/Bildserien BS₁, BS₅ erleichtert.

Bei einer besonders komfortablen Variante der Erfindung wird mit Hilfe einer Analyseeinheit 74 eine automatische Qualitätsanalyse der aufgenommenen Bilder bzw. Bildserien BS₁, BS₅ vorgenommen. Dabei werden mit den üblichen Mustererkennungsverfahren die Bilder hinsichtlich im Erntegut befindlicher unerwünschter Bestandteile untersucht. Eine solche Analyse ist relativ einfach möglich, da die gesuchten Bestandteile meist bestimmte Charakteristiken aufweisen, die in den Bildern stark hervorstechen. So ist beispielsweise, wie Figur 2a zeigt, eine Ährenspitze innerhalb der Triticale-Körner sehr leicht erkennbar. Ebenso sind mit sehr einfachen Merkmalen Kurzstroh und Grannen innerhalb der Körnermenge leicht zu erkennen (siehe Figuren 2b und 2c). So muss hierzu im Bild einfach nur nach parallel laufenden Kanten gesucht werden, welche in einem bestimmten Abstand zueinander liegen. Das Gleiche gilt auch für die in Figur 2d gezeigten Schotenteile. Entsprechende charakteristische Merkmale der gesuchten Bestandteile können in der Speichereinrichtung 70 hinterlegt sein. Für die Bildauswertung kann die Analyseeinheit 74 dann darauf zurückgreifen. Es kann dann z. B. einfach die Anzahl der störenden Bestandteile innerhalb des jeweiligen Bilds gezählt und daraus ein Verunreinigungsgrad berechnet werden. Bei mehreren Bildern einer Bildserie kann z. B. ein Mittelwert gebildet werden.

Das Analyseergebnis A kann dann an eine Auswahleinheit 75 weitergegeben werden, welche aufgrund der Analyseergebnisse A vollautomatisch ein gewünschtes Bild auswählt. Alternativ ist es auch möglich, dass das Analyseergebnis A von der Analyseeinheit 74 jeweils mit der Bildserie BS₁, BS₅ auf der Anzeigeeinrichtung ausgegeben wird, um dem Fahrer F die Auswahl zu erleichtern. Ebenso kann von der Auswahleinheit 75 auch durch entsprechende Markierung einer Bildserie BS₁, BS₅ ein Vorschlag für die Auswahl einer Bildserie BS₁, BS₅ gemacht werden, die dann vom Fahrer F akzeptiert oder abgelehnt werden kann.

Ist schließlich eine Bildserie BS₅ entweder visuell durch den Benutzer, automatisch oder halbautomatisch ausgewählt worden, so werden die zu dieser Bildserie BS₁ gehörenden Steuerparameter-Einstellwerte DW, DD, DG, UW, OW angefahren. Hierzu steuert die Steuereinrichtung 70 die Arbeitsaggregate 4, 11 über die Regelkreise entsprechend so an, dass die gewünschten Zustandsparameter-Einstellwerte DW, DD, DG, UW, OW als Sollwerte vorgegeben werden. Bevorzugt werden - unabhängig davon, ob die Auswahl automatisch, halbautomatisch oder durch den Fahrer erfolgt - nicht nur die durch die Bilder angezeigte Qualität des Erntegutstroms bei der Einstellung, sondern auch weitere Parameter wie der Erntegutdurchsatz und/oder die Reinigungs- oder Abscheideverluste berücksichtigt.

Es wird abschließend noch einmal darauf hingewiesen, dass es sich bei dem in den Figuren dargestellten Mähdrescher und der Steuerung sowie dem im Zusammenhang damit erläuterten konkreten Verfahren lediglich um Ausführungsbeispiele handelt, welche vom Fachmann in vielfacher Hinsicht variiert werden können, ohne den Rahmen der Erfindung zu verlassen. Aus Sicherheitsgründen ist z. B. das System so ausgelegt, dass der Fahrer jederzeit während eines Ernteeinsatzes in der Lage ist, einzelne oder alle eingestellten Maschinenparameter manuell zu übersteuern.

### Bezugszeichenliste

- 1: Mähdrescher
- 2: Schneidwerk
- 3: Schrägförderer
- 4: Drescheinrichtung
- 5: Vorbeschleunigertrommel
- 6: Dreschtrommel
- 7: Wendetrommel
- 8: Dreschkorb
- 9: Schüttler
- 10: Überkehrbereich
- 11: Reinigungseinrichtung
- 12: Obersieb
- 13: Untersieb
- 14: Gebläse
- 15: Kornelevator
- 16: Ährenelevator
- 17: Dreschspalt
- 18: Vorbereitungsboden
- 19: Rücklaufboden
- 20: Korntank
- 21: Tankentleerförderer
- 22: Fahrerkabine
- 23: Auffangboden
- 24: Ährenförderschnecke
- 25: Auffang- und Führungsboden
- 26: Kornförderschnecke
- 60: Kamera
- 61: Dreschkorbweiten-Messeinrichtung
- 62: Dreschtrommeldrehzahl-Messeinrichtung
- 63: Gebläsedrehzahl-Messeinrichtung
- 64: Untersiebweiten-Messeinrichtung
- 65: Obersiebweiten-Messeinrichtung
- 70: Steuervorrichtung
- 71: Speichereinheit
- 72: Anzeigeeinrichtung
- 73: Bedieneinrichtung
- 74: Cursortaste
- 75: "+"-Taste
- 76: "-" -Taste
- 77: Speichereinheit
- A: Analyseergebnis
- B: Bild
- W: Ernteguttransportweg
- AB: Auswahlbefehl
- BK: Bilderkennungsanzeigefeld
- BS₁: Bildserie
- BS₅: Bildserie
- DD: Dreschtrommeldrehzahl
- DG: Gebläsedrehzahl
- DW: Dreschkorbweiten-Signal
- EB: Erntebedingung
- OW: Obersiebweite
- QI: Qualitätsinformation
- RB: Referenzbilder
- UW: Untersiebweite
- ZA: Zustandsanzeigefeld

## Patentansprüche

1. Verfahren zur Einstellung zumindest eines Arbeitsaggregats (4, 11) einer Erntemaschine (1),
- bei dem an einer dem betreffenden Arbeitsaggregat (4, 11) nachgeordneten Position im Ernteguttransportweg (W) bei verschiedenen Einstellzuständen mit bestimmten Steuerparameter-Einstellwerten des Arbeitsaggregats (4, 11) Bilder (B) oder Bildserien (BS₁, BS₅) eines Erntegutstroms (G) erzeugt werden,
- bei dem die Bilder (B) oder Bildserien (BS₁, BS₅) unter Zuordnung von zu dem jeweiligen Einstellzustand zugehörigen Steuerparameter-Einstellwerten (DW, DD, DG, UW, OW) gespeichert werden,
- bei dem aufgrund einer Analyse des auf den Bildern (B) oder Bildserien (BS₁, BS₅) dargestellten Erntegutstroms (G) ein Bild oder eine Bildserie (BS₅) ausgewählt wird
- und bei dem das betreffende Arbeitsaggregat (4, 11) unter Verwendung der dem ausgewählten Bild oder der ausgewählten Bildserie (BS₅) zugeordneten Steuerparameter-Einstellwerte (DW, DD, DG, UW, OW) eingestellt wird.

2. Verfahren nach Anspruch 1, **dadurch gekennzeichnet, dass**
innerhalb eines Optimierungsvorgangs gezielt zumindest ein Steuerparameter (DW, DD, DG, UW, OW) oder eine Gruppe von Steuerparametern (DW, DD, DG, UW, OW) des Arbeitsaggregats (4, 11) unter Konstanthaltung der übrigen Steuerparameter (DW, DD, DG, UW, OW) variiert werden und bei bestimmten Einstellungen dieses Steuerparameters (DW, DD, DG, UW, OW) oder der Gruppe von Steuerparametern (DW, DD, DG, UW, OW) jeweils ein Bild (B) oder eine Bildserie (BS₁, BS₅) erzeugt wird.

3. Verfahren nach Anspruch 1 oder 2, **dadurch gekennzeichnet, dass**
den Bildern (B) oder Bildserien (BS₁, BS₅) zugeordnet jeweils neben Steuerparameter-Einstellwerten (DW, DD, DG, UW, OW) des einzustellenden Arbeitsaggregats (4, 11) auch die zum Zeitpunkt der Bilderzeugung gegebenen Steuerparameter-Einstellwerte (DW, DD, DG, UW, OW) anderer Arbeitsaggregate (4, 11) der Erntemaschine (1) und/oder Informationen (EB) über die zum Zeitpunkt der Bilderzeugung vorliegenden Erntebedingungen gespeichert werden.

4. Verfahren nach einem der Ansprüche 1 bis 3, **dadurch gekennzeichnet, dass** ein Bild (B) oder eine Bildserie (BS₁, BS₅) des Erntegutstroms (G) bei einem bestimmten Einstellzustand erst nach Ablauf einer bestimmten Zeitspanne erzeugt wird, nachdem der betreffende Einstellzustand des Arbeitsaggregats (4, 11) angefahren wurde.

5. Verfahren nach einem der Ansprüche 1 bis 4, **dadurch gekennzeichnet, dass** die bei verschiedenen Einstellzuständen erzeugten Bilder (B) oder Bildserien (BS₁, BS₅) einem Bediener (F) der Erntemaschine (1) zur Auswahl angezeigt werden.

6. Verfahren nach Anspruch 5, **dadurch gekennzeichnet, dass** die Anzeige der zu verschiedenen Einstellzuständen gehörenden Bilder (B) oder Bildserien (BS₁, BS₅) zumindest teilweise parallel erfolgt.

7. Verfahren nach einem der Ansprüche 1 bis 6, **dadurch gekennzeichnet, dass** die bei verschiedenen Einstellzuständen erzeugten Bilder (B) oder Bildserien (BS₁, BS₅) automatisch analysiert werden und auf Basis eines Analyseergebnisses (A) ein Bild (B) oder eine Bildserie (BS₅) ausgewählt wird.

8. Verfahren nach Anspruch 7, **dadurch gekennzeichnet, dass** die Auswahl eines Bilds (B) oder einer Bildserie (BS₁, BS₅) auf Basis des Analyseergebnisses (A) automatisch erfolgt.

9. Verfahren nach einem der Ansprüche 1 bis 7, **dadurch gekennzeichnet, dass** zur Analyse eines Bilds (B) oder einer Bildserie (BS₁, BS₅) Referenzbilder (RB) herangezogen werden.

10. Verfahren nach Anspruch 9, **dadurch gekennzeichnet, dass** den Referenzbildern (RB) jeweils Qualitätsinformationen (Ql) betreffend den auf dem jeweiligen Referenzbild (RB) abgebildeten Erntegutstrom zugeordnet sind.

11. Verfahren nach einem der Ansprüche 1 bis 10, **dadurch gekennzeichnet, dass** die Bilder (B) oder Bildserien (BS₁, BS₅) im Ernteguttransportweg (W) zwischen einem Ausgang einer Reinigungseinrichtung (11) und einem Erntegutspeicher (20) oder einem Erntegutausgang (21) der Erntemaschine (1) erzeugt werden.

12. Verfahren nach einem der Ansprüche 1 bis 9, **dadurch gekennzeichnet, dass** bei einem Einstellzustand Bilder oder Bildserien des Erntegutstroms an verschiedenen Positionen im Ernteguttransportweg erzeugt werden.

13. Erntemaschine (1) mit
- einem Arbeitsaggregat (4, 11),
- einem an einer dem betreffenden Arbeitsaggregat (4, 11) nachgeordneten Position im Ernteguttransportweg (W) angeordneten Bilddetektor (60), um Bilder (B) oder Bildserien (BS₁, BS₅) eines Erntegutstroms (G) zu erzeugen,
- einer Steuereinheit (70), welche derart ausgebildet ist, dass das Arbeitsaggregat (4, 11) durch eine Ansteuerung mit bestimmten Steuerparameter-Einstellwerten in verschiedene Einstellzustände gebracht wird und dass bei verschiedenen Einstellzuständen des Arbeitsaggregats (4, 11) Bilder (B) oder Bildserien (BS₁, BS₅) des Erntegutstroms (G) erzeugt werden,
- einer Speichereinrichtung (71) zum Speichern der Bilder (B) oder Bildserien (BS₁, BS₅) unter Zuordnung von zu dem jeweiligen Einstellzustand zugehörigen Steuerparameter-Einstellwerten (DW, DD, DG, UW, OW),
- einer Auswahleinheit (72, 73, 75), um aufgrund einer Analyse des auf den Bildern (B) oder Bildserien (BS₁, BS₅) dargestellten Erntegutstroms ein Bild (B) oder eine Bildserie (BS₁ BS₅) auszuwählen,
- einer Steuereinheit (70), welche derart ausgebildet ist, dass das betreffende Arbeitsaggregat (4, 11) unter Verwendung der dem ausgewählten Bild oder der ausgewählten Bildserie (BS₅) zugeordneten Steuerparameter-Einstellwerte (DW, DD, DG, UW, OW) eingestellt wird.

14. Erntemaschine nach Anspruch 13, **gekennzeichnet durch** eine Analyseeinheit (74), um die bei verschiedenen Einstellzuständen erzeugten Bilder (B) oder Bildserien (BS1, BS5) automatisch zu analysieren.

15. Erntemaschine nach Anspruch 14, **dadurch gekennzeichnet, dass** die Auswahleinheit (75) derart ausgebildet ist, dass die Auswahl eines Bilds (B) oder einer Bildserie (BS₁, BS₅) auf Basis eines Analyseergebnisses (A) automatisch erfolgt.

16. Erntemaschine nach einem der Ansprüche 13 bis 15, **dadurch gekennzeichnet, dass** die Auswahleinheit eine Anzeigeeinrichtung (72), um die bei verschiedenen Einstellzuständen erzeugten Bilder (B) oder Bildserien (BS₁, BS₅) einem Bediener (F) der Erntemaschine (1) zur Auswahl anzuzeigen, sowie eine Erfassungseinrichtung (73) zur Erfassung eines Auswahlbefehls (AB) des Bedieners (F) umfasst.

17. Erntemaschine nach einem der Ansprüche 13 bis 16, **gekennzeichnet durch** eine Mehrzahl von an verschiedenen Position im Ernteguttransportweg angeordneten Bilddetektoren.

## Claims

1. A method of adjusting at least one working assembly (4, 11) of a harvesting machine (1),
- wherein images (B) or image series (BS₁, BS₅) of a crop material flow (G) are produced at a position downstream of the working assembly (4, 11) in question in the crop material transport path (W) at different adjustment states with given control parameter adjustment values of the working assembly (4, 11),
- wherein the images (B) or image series (BS₁, BS₅) are stored with the association of control parameter adjustment values (DW, DD, DG, UW, OW) associated with the respective adjustment state,
- wherein an image or an image series (BS₅) is selected on the basis of an analysis of the crop material flow (G) represented on the images (B) or image series (BS₁, BS₅), and
- wherein the working assembly (4, 11) in question is adjusted using the control parameter adjustment values (DW, DD, DG, UW, OW) associated with the selected image or the selected image series (BS₅).

2. A method according to claim 1 **characterised in that** within an optimisation operation at least one control parameter (DW, DD, DG, UW, OW) or a group of control parameters (DW, DD, DG, UW, OW) of the working assembly (4, 11) are specifically varied while keeping the other control parameters (DW, DD, DG, UW, OW) constant and a respective image (B) or an image series (DS₁, BS₅) is produced at given settings of said control parameter (DW, DD, DG, UW, OW) or the group of control parameters (DW, DD, DG, UW, OW).

3. A method according to claim 1 or claim 2 **characterised in that** associated with the images (B) or image series (BS₁, BS₅) besides control parameter adjustment values (DW, DD, DG, UW, OW) of the working assembly (4, 11) to be adjusted the control parameter adjustment values (DW, DD, DG, UW, OW), given at the moment of image production, of other working assemblies (4, 11) of the harvesting machine (1) and/or items of information (EB) about the harvesting conditions prevailing at the time of image production are also respectively stored.

4. A method according to one of claims 1 to 3 **characterised in that** an image (B) or an image series (BS₁, BS₅) of the crop material flow (G) is produced with a given adjustment state only after the expiry of a given period of time after the adjustment state in question of the working assembly (4, 11) was implemented.

5. A method according to one of claims 1 to 4 **characterised in that** the images (B) or image series (BS₁, BS₅) produced at various adjustment states are displayed for selection to an operator (F) of the harvesting machine (1).

6. A method according to claim 5 **characterised in that** the display of the images (B) or image series (BS₁, BS₅) belonging to different adjustment states is effected at least partially in parallel.

7. A method according to one of claims 1 to 6 **characterised in that** the images (B) or image series (BS₁, BS₅) produced at various adjustment states are automatically analysed and an image (B) or an image series (BS₅) is selected on the basis of an analysis result (A).

8. A method according to claim 7 **characterised in that** the selection of an image (B) or an image series (BS₁, BS₅) is effected automatically on the basis of the analysis result (A).

9. A method according to one of claims 1 to 7 **characterised in that** reference images (RB) are used for the analysis of an image (B) or an image series (BS₁, BS₅).

10. A method according to claim 9 **characterised in that** items of quality information (QI) concerning the crop material flow imaged on the respective reference image (RB) are respectively associated with the reference images (RB).

11. A method according to one of claims 1 to 10 **characterised in that** the images (B) or image series (BS₁, BS₅) are produced in the crop material transport path (W) between an outlet of a cleaning device (21) and a crop material storage device (20) or a crop material outlet (21) of the harvesting machine (1).

12. A method according to one of claims 1 to 9 **characterised in that** images or image series of the crop material flow are produced with an adjustment state at various positions in the crop material transport path.

13. A harvesting machine (1) comprising
- a working assembly (4, 11),
- an image detector (60) arranged in the crop material transport path (W) at a position downstream of the working assembly (4, 11) in question for producing images (B) or image series (BS₁, BS₅) of a crop material flow (G),
- a control unit (70) which is so adapted that the working assembly (4) is brought into various adjustment states by actuation with given control parameter adjustment values and that images (B) or image series (BS₁, BS₅) of the crop material flow (G) are produced at various adjustment states of the working assembly (4, 11),
- a storage device (71) for the storage of the images (B) or image series (BS₁, BS₅) with association of control parameter adjustment values (DW, DD, DG, UW, OW) associated with the respective adjustment state,
- a selection unit (72, 73, 75) for selecting an image (B) or an image series (BS₁, BS₅) on the basis of an analysis of the crop material flow represented on the images (B) or image series (BS₁, BS₅), and
- a control unit (70) which is so adapted that the working assembly (4, 11) in question is adjusted using the control parameter adjustment values (DW, DD, DG, UW, OW) associated with the selected image or the selected image series (BS₅).

14. A harvesting machine according to claim 13 **characterised by** an analysis unit (74) for automatically analysing the images (B) or image series (BS₁, BS₅) produced at different adjustment states.

15. A harvesting machine according to claim 14 **characterised in that** the selection unit (75) is so adapted that the selection of an image (B) or an image series (BS₁, BS₅) is effected automatically on the basis of an analysis result (A).

16. A harvesting machine according to one of claims 13 to 15 **characterised in that** the selection unit includes a display device (72) for displaying the images (B) or image series (BS₁, BS₅) produced at different adjustment states to an operator (F) of the harvesting machine (1) for selection, and a receiving device (73) for receiving a selection command (AB) from the operator (F).

17. A harvesting machine according to one of claims 13 to 16 **characterised by** a multiplicity of image detectors arranged at various positions in the crop material transport path.

## Revendications

1. Procédé de réglage d'un organe de travail (4, 11) pour une récolteuse agricole (1),
- dans lequel, au niveau d'une position correspondant à l'organe de travail concerné (4, 11) dans le parcours de transport du produit de récolte (W), des images (B) ou séries d'images (BS₁, BS₅) d'un flux de produit de récolte (G) sont générées pour différents états de réglage avec des valeurs de consigne de paramètre de commande de l'organe de travail (4, 11),
- dans lequel les images (B) ou séries d'images (BS₁, BS₅) sont mémorisées avec affectation des valeurs de consigne de paramètres de commande (DW, DD, DG, UW, OW) appartenant à chaque état de réglage,
- dans lequel, sur la base d'une analyse du flux de produit de récolte (G) représenté sur les images (B) ou séries d'images (BS₁, BS₅), une image ou une série d'images (BS₅) est sélectionnée,
- et dans lequel l'organe de travail concerné (4, 11) est réglé avec utilisation des valeurs de consigne de paramètres de commande (DW, DD, DG, UW, OW) affectées à l'image sélectionnée ou la série d'images sélectionnée (BS₅).

2. Procédé selon la revendication 1, **caractérisé en ce que**, à l'intérieur d'un processus d'optimisation, au moins un paramètre de commande (DW, DD, DG, UW, OW) ou un groupe de paramètres de commande (DW, DD, DG, UW, OW) ciblé de l'organe de travail (4, 11) est modifié avec stabilisation du paramètre de commande restant (DW, DD, DG, UW, OW) et, pour des réglages déterminés de ce paramètre de commande (DW, DD, DG, UW, OW) ou du groupe de paramètres de commande (DW, DD, DG, UW, OW), une image ou une série d'images (BS₁, BS₅) est générée à chaque fois.

3. Procédé selon la revendication 1 ou 2, **caractérisé en ce qu'**en plus des images (B) ou séries d'images (BS₁, BS₅) affectées chaque fois à côté de valeurs de consigne de paramètres de commande (DW, DD, DG, UW, OW) de l'organe de travail (4, 11) à régler, les valeurs de consigne de paramètres de commande (DW, DD, DG, UW, OW) présentes à l'instant de la génération d'image d'autres organes de travail (4, 11) de la récolteuse (1) et/ou des informations (EB) sur les conditions de récolte présentes à l'instant de la génération d'image sont mémorisées.

4. Procédé selon l'une des revendications 1 à 3, **caractérisé en ce qu'**une image ou une série d'images (BS₁, BS₅) du flux de produit de récolte (G) pour un état de réglage déterminé est générée seulement après écoulement d'un intervalle de temps déterminé, après lequel l'état de réglage en question de l'organe de travail (4, 11) serait démarré.

5. Procédé selon l'une des revendications 1 à 4, **caractérisé en ce que** les images (B) ou séries d'images (BS₁, BS₅) générées pour différents états de réglage sont visualisées au choix à un conducteur (F) de la récolteuse (1).

6. Procédé selon la revendication 5, **caractérisé en ce que** la visualisation des images (B) ou séries d'images (BS₁, BS₅) appartenant à différents états de réglage est effectuée au moins partiellement en parallèle.

7. Procédé selon l'une des revendications 1 à 6, **caractérisé en ce que** les images (B) ou séries d'images (BS₁, BS₅) générées pour différents états de réglage sont analysées automatiquement et, sur la base d'un résultat d'analyse (A), une image ou une série d'images (BS₅) est sélectionnée.

8. Procédé selon la revendication 7, **caractérisé en ce que** la sélection d'une image ou d'une série d'images (BS₁, BS₅) sur la base du résultat d'analyse (A) est effectuée automatiquement.

9. Procédé selon l'une des revendications 1 à 7, **caractérisé en ce que** des images de références (RB) sont prises pour l'analyse d'une image ou d'une série d'images (BS₁, BS₅).

10. Procédé selon la revendication 9, **caractérisé en ce que** des informations de qualité (QI) relatives au flux de produit de récolte représenté sur chaque image de références (RB) sont affectées aux images de références (RB) concernées.

11. Procédé selon l'une des revendications 1 à 10,
**caractérisé en ce que** les images (B) ou séries d'images (BS₁, BS₅) sont générées dans un parcours de transport du produit de récolte (W) entre une sortie d'un dispositif de nettoyage (11) et un réservoir de produit de récolte (20) ou une sortie de produit de récolte (21) de la récolteuse (1).

12. Procédé selon l'une des revendications 1 à 9, **caractérisé en ce que**, pour un état de réglage, des images ou séries d'images du flux de produit de récolte seront générées au niveau de différentes positions dans le parcours de transport du produit de récolte.

13. Récolteuse (1) comprenant
- un organe de travail (4, 11),
- un détecteur d'image (60) disposé au niveau d'une position correspondant à l'organe de travail concerné (4, 11) dans le parcours de transport du produit de récolte (W) pour générer des images (B) ou séries d'images (BS₁, BS₅) d'un flux de produit de récolte (G),
- une unité de commande (70), laquelle est prédisposée de manière que l'organe de travail (4, 11) soit amené dans différents états de réglage par une commande avec des valeurs de consigne de paramètre de commande et que des images (B) ou séries d'images (BS₁, BS₅) du flux de produit de récolte (G) soient générées pour différents états de réglage avec des valeurs de consigne de paramètre de commande de l'organe de travail (4, 11),
- une unité de mémoire (71) pour la mémorisation des images (B) ou séries d'images (BS₁, BS₅) avec affectation des valeurs de consigne de paramètres de commande (DW, DD, DG, UW, OW) appartenant à chaque état de réglage,
- une unité de sélection (72, 73, 75), pour sélectionner une image ou une série d'images (BS₅) sur la base d'une analyse du flux de produit de récolte (G) représenté sur les images (B) ou séries d'images (BS₁, BS₅),
- une unité de commande (70), laquelle est prédisposée de manière que l'organe de travail concerné (4, 11) soit réglé avec utilisation des valeurs de consigne de paramètres de commande (DW, DD, DG, UW, OW) affectées à l'image sélectionnée ou la série d'images sélectionnée (BS₅).

14. Récolteuse selon la revendication 13, **caractérisée par** une unité d'analyse (74) pour analyser automatiquement les images (B) ou séries d'images (BS₁, BS₅) .

15. Récolteuse selon la revendication 14, **caractérisée en ce que** l'unité de sélection (75) est prédisposée de manière que la sélection d'une image ou d'une série d'images (BS₅) s'effectue automatiquement sur la base d'un résultat d'analyse (A).

16. Récolteuse selon l'une des revendications 13 à 15, **caractérisée en ce que** l'unité de sélection comprend un dispositif d'affichage (72) pour visualiser au choix à un conducteur (F) de la récolteuse (1) les images (B) ou séries d'images (BS₁, BS₅) générées pour différents états de réglage, ainsi qu'un dispositif de saisie (73) pour l'acquisition d'une instruction de sélection (AB) du conducteur (F).

17. Récolteuse selon l'une des revendications 13 à 16, **caractérisée par** une pluralité de détecteurs d'image disposés dans différentes positions dans le parcours de transport du produit de récolte.
